# FASCICULE DE BREVET EUROPEEN

(11) **EP 2 591 677 B1**
(45) Date de publication et mention de la délivrance du brevet: **25.10.2017**
(21) Numéro de dépôt: 13154351.4
(22) Date de dépôt: 11.03.2009
(51) Int. Cl.: A01P 15/00, A01N 1/00

(54) **Composition pour la conservation des tissus**
Zusammensetzung zur Gewebekonservierung
Composition for preserving tissue

(30) Priorité: 13.03.2008 FR 0851637
(43) Date de publication de la demande: 15.05.2013
(62) Demande divisionnaire de: 09728292.5
(73) Titulaire: OGF, 75019 Paris (FR)
(72) Inventeur: Dissard, Dominique, 57330 Entrance (FR); Jay, Jean-Charles, 38122 Monsteroux Milieu (FR); Gilotin, Denis, 69780 Mions (FR); Graugnard, Henri, 13520 Le Paradou (FR); Berka, Nabil, 69007 Lyon (FR)
(74) Mandataire: Lavoix

(56) Documents cités:
- WO-A-2006/059126

## Description

La présente invention a pour objet une composition destinée à la conservation des tissus, notamment pour la réalisation de soins de thanatopraxie.

La conservation d'échantillons biologiques et l'embaumement des corps humains ou animaux ont été historiquement effectués en utilisant des fluides contenant des quantités significatives de formaldéhyde.

Cependant, le formaldéhyde présente un grand nombre d'inconvénients en tant que conservateur. Par exemple, il existe de nombreux risques sanitaires et environnementaux associés à son utilisation notamment en raison de sa toxicité élevée. Parmi les dangers d'une exposition à court terme au formaldéhyde, on peut citer des irritations du nez et de la gorge, des maux de tête et des nausées. Une exposition de longue durée peut provoquer une altération chronique des fonctions pulmonaires, une inflammation de la peau et un cancer.

Le formaldéhyde déshydrate également les tissus biologiques et présente une odeur nuisante. Un inconvénient de l'utilisation du formaldéhyde dans les fluides pour l'embaumement est lié au fait que le formaldéhyde coagule et réticule de nombreux liquides du corps, ce qui engendre un raidissement des tissus corporels. Par conséquent, il peut être difficile et long de s'assurer d'une répartition régulière du fluide d'embaumement dans tout le corps. Le dessèchement de la peau par le formaldéhyde peut également conduire à des écorchures du corps et à des brûlures localisées. En raison de son caractère volatile, le formaldéhyde présente une faible efficacité résiduelle, ce qui conduit à une décomposition rapide des surfaces de la peau.

Ainsi, le formaldéhyde présente différents problèmes sanitaires, d'hygiène et de sécurité.

A ce jour, il n'existe pas de produit de substitution satisfaisant.

La présente invention a donc pour but de fournir un produit destiné à la conservation des tissus, et notamment à la réalisation de soins de thanatopraxie, permettant de s'affranchir des inconvénients mentionnés ci-dessus liés à l'utilisation du formaldéhyde.

Plus particulièrement, ce produit doit permettre d'assurer, d'une part, une bonne présentation du défunt de façon à faciliter le transfert du deuil des familles, et d'autre part, la conservation du corps durant une durée suffisante permettant de réaliser les opérations définies par les autorités publiques et nécessitant l'utilisation de soins de conservation.

Un autre but de la présente invention consiste à fournir une composition destinée à la conservation des tissus, permettant de disposer, pour le personnel réalisant les soins et plus généralement pour toute personne fréquentant les lieux où les soins ont été réalisés ou simplement étant proche du corps du défunt, de conditions sanitaires, d'hygiène et de sécurité satisfaisantes n'engageant aucun élément de dangerosité particulière.

Des compositions comprenant du 2-bromo-2-nitropropane-1,3-diol sont utiles pour la conservation des tissus.

Le bronopol ou 2-bromo-2-nitropropane-1,3-diol (C₃H₆BrNO₄) est une poudre cristalline dont la couleur varie de blanc à jaune pâle.

Ce produit est stable et est utilisé comme bactéricide.

Une telle utilisation pour l'embaumement est décrite dans le document WO 2006/059126.

Le bronopol est un biocide qui ne présente pas ou peu de risques pour la santé humaine. Son utilisation permet d'éviter l'inhalation de vapeurs lors de la réalisation des soins par le praticien. Par ailleurs, le bronopol ne présente aucune volatilité à température ambiante.

Il est décrit que la composition susmentionnée est utilisée pour la conservation des pièces anatomiques humaines, notamment pour la conservation des corps destinés à être disséqués.

Selon un autre mode de réalisation particulier, la composition susmentionnée est utilisée pour la réalisation de soins de thanatopraxie.

Le terme "thanatopraxie" désigne les soins visant à la conservation et à la présentation du corps d'un défunt, à savoir les techniques d'embaumement ou qui s'apparentent à l'embaumement des cadavres.

La composition susmentionnée peut donc être utilisée pour les soins de thanatopraxie, pour la conservation des corps dans l'optique de leur dissection et pour la conservation des pièces anatomiques humaines et animales.

Il est décritl'utilisation telle que définie ci-dessus d'une composition comprenant au moins environ 1% en poids de 2-bromo-2-nitropropane-1,3-diol.

Il est mentionné ici que les pourcentages en poids indiqués dans ce qui suit et ce qui précède sont exprimés par rapport au poids total de la composition de l'invention.

Il est décrit que de préférence, dans le cadre de l'utilisation telle que définie ci-dessus, la composition susmentionnée comprend d'environ 0,5% à environ 2,5%, et de préférence d'environ 0,8% à environ 2,5%, en poids de 2-bromo-2-nitropropane-1,3-diol.

Ces valeurs de concentrations sont liées à la variabilité de réaction du bronopol en fonction de l'état spécifique des corps traités.

L'utilisation d'une composition comprenant du 2-bromo-2-nitropropane-1,3-diol pour la conservation des tissus, caractérisée en ce que ladite composition comprend de 0,1% à 8% en poids de 2-bromo-2-nitropropane-1,3-diol est décrite

L'utilisation pour les soins de thanatopraxie d'une composition comprenant de 0,4% à 8% en poids de 2-bromo-2-nitropropane-1,3-diol est décrite

L'utilisation pour les soins de thanatopraxie par injection artérielle d'une composition comprenant de 0,3% à 2,4%, de préférence de 0,3% à 1,2%, avantageusement de 0,3% à 0,6%, de 0,4% à 0,6%, et préférentiellement 0,6%, en poids de 2-bromo-2-nitropropane-1,3-diol est également décrite

La présente invention concerne l'utilisation pour les soins de thanatopraxie par injection dans les cavités d'une composition comprenant de 5% à 8%, et préférentiellement 5%, en poids de 2-bromo-2-nitropropane-1,3-diol.

Il est également décritl'utilisation pour l'embaumement des corps pour dissection d'une composition comprenant de 0,8% à 1,2% en poids de 2-bromo-2-nitropropane-1,3-diol.

L'utilisation pour la conservation d'organes d'une composition comprenant de 0,1% à 0,5%, de préférence 0,15%, en poids de 2-bromo-2-nitropropane-1,3-diol est décrite

De façon générale, les compositions mentionnées ci-dessus sont soit des solutions conditionnées pour leur transport (qui sont diluées par la suite avant leur injection), soit des solutions prêtes à être injectées.

Selon un autre mode de réalisation, dans le cadre de l'utilisation telle que définie ci-dessus, la composition susmentionnée comprend en outre un anticoagulant, de préférence le citrate de sodium.

Un anticoagulant est une molécule destinée à empêcher ou à retarder la coagulation du sang. Dans le cadre de la composition de l'invention, l'anticoagulant permet de dissoudre les caillots sanguins et de favoriser le passage de ladite composition en intra-artériel et le drainage des artères.

Parmi les anticoagulants, on peut citer : le citrate de sodium, l'héparine, l'oxalate de sodium, l'EDTA, les borates tels que le borate de sodium, le tétraborate de sodium ou le pyroborate de sodium, le sulfate de magnésium, le chlorure de sodium, le sulfate de sodium et le phosphate de sodium.

On peut noter que certains de ces produits sont utilisés en médecine pour la décoagulation de fluide sanguin. Par exemple, l'héparine et le citrate de sodium peuvent être utilisés pour fluidifier le sang et éviter la formation de caillots sanguins chez les malades, et le sulfate de magnésium peut être utilisé dans les fluides d'embaumement pour favoriser l'évacuation de l'eau contenue dans les oedèmes.

Plus particulièrement, dans le cadre de la présente invention, la composition susmentionnée comprend d'environ 0,05% à environ 2%, de préférence d'environ 0,1% à environ 1,5%, en poids d'anticoagulant, et notamment d'environ 0,1% à environ 1,5% en poids de citrate de sodium.

Pour des soins effectués sur des corps destinés à la dissection ne pouvant être ponctionnés ou drainés, on utilise une concentration peu élevée en substance anticoagulante. C'est également le cas pour des défunts dont la confession religieuse prohibe toute ponction.

Par ailleurs, et dans certaines conditions, cette même concentration sera augmentée de façon à améliorer la ponction cardiaque.

La présente invention concerne également l'utilisation telle que définie ci-dessus, caractérisée en ce que la composition susmentionnée comprend en outre un agent pénétrant, notamment la glycérine.

Dans le cadre de la composition de la présente invention, l'agent pénétrant permet de transporter les liquides par drainage et capillarité et est également associé à un effet déshydratant.

Parmi les agents pénétrants, on peut citer : le sorbitol, l'éthylène glycol et le propylène glycol.

Plus particulièrement, dans le cadre de la présente invention, la composition susmentionnée comprend d'environ 3% à environ 40% en poids d'agent pénétrant, notamment d'environ 3% à environ 40% en poids de glycérine.

La présente invention concerne également l'utilisation telle que définie ci-dessus, caractérisée en ce que la composition susmentionnée comprend en outre un antiseptique ou solvant, notamment choisi parmi le méthanol et l'éthanol.

Un antiseptique est une substance qui désinfecte et tue les germes microbiens. Dans le cadre de la composition de la présente invention, on utilise de préférence de l'éthanol ou du méthanol. Ces produits présentent des propriétés d'antiseptique, de conservateur et de déshydratant ; ils agissent comme solvants des produits en présence dans la composition de l'invention.

De préférence, l'antiseptique utilisé est un monoalcool primaire à faible masse molaire permettant une bonne diffusion dans les tissus.

Plus particulièrement, dans le cadre de la présente invention, la composition susmentionnée comprend d'environ 2% à environ 45%, de préférence d'environ 2% à environ 40%, et préférentiellement d'environ 2% à environ 35% en poids d'antiseptique, et notamment d'environ 2% à environ 35% en poids de méthanol ou d'éthanol.

La présente invention concerne également l'utilisation telle que définie ci-dessus, caractérisée en ce que la composition susmentionnée comprend en outre un colorant, notamment choisi parmi l'amarante et l'éosine.

Ainsi, la composition utilisée dans le cadre de la présente invention contient également un colorant des tissus. Parmi les colorants utilisés, on peut citer, outre l'amarante (qui donne une coloration rouge rosé) et l'éosine (qui donne une coloration rose), le ponceau (qui donne une coloration rouge cerise), l'érythrosine (qui donne une coloration rouge cerise) et l'acide carminique (qui donne une coloration rouge carmin).

Ces colorants sont inertes, c'est-à-dire qu'ils ne servent qu'à pigmenter la composition de l'invention et ces produits sont classés par gamme de couleur en fonction des sujets rencontrés.

Plus particulièrement, dans le cadre de la présente invention, la composition susmentionnée comprend moins d'environ 0,2% en poids de colorant, notamment de 0 à 0,2% en poids d'amarante ou d'éosine.

D'autres produits peuvent être introduits en quantité variable dans ladite composition, de façon à obtenir, en fonction des différents cas d'application, les résultats escomptés (cas des ictères par exemple).

Ainsi, en cas d'excès de bilirubine non conjuguée dans les tissus, il est possible d'ajouter à la composition de l'acide glucoronique et une enzyme spécifique, la transférase diphosphate uridyle, ceci permettant la disparition de la bilirubine et donc de la coloration jaune ou verdâtre.

Une composition comprenant du 2-bromo-2-nitropropane-1,3-diol, un anticoagulant, un agent pénétrant, un antiseptique, et le cas échéant, un colorant est décrite

Une composition susmentionnée,constituée de 2-bromo-2-nitropropane-1,3-diol, d'un anticoagulant tel que le citrate de sodium, d'un agent pénétrant tel que la glycérine, d'un antiseptique tel que le méthanol ou l'éthanol, et d'un colorant tel que l'éosine ou l'amarante est décrite

Il est décrit une composition comprenant :
- d'environ 0,5% à environ 2,5% en poids de 2-bromo-2-nitropropane-1,3-diol ;
- d'environ 0,1% à environ 2% en poids d'anticoagulant ;
- d'environ 3% à environ 40% en poids d'agent pénétrant ;
- d'environ 2% à environ 45% en poids d'antiseptique ; et
- moins d'environ 0,2% en poids de colorant.

Une méthode d'embaumement, qui comprend l'injection, dans le corps qui doit être embaumé, d'une composition telle que définie ci-dessus comprenant du 2-bromo-2-nitropropane-1,3-diol est décrite. L'injection peut être effectuée dans les cavités (notamment thoraciques ou abdominales) ou dans les artères (notamment fémorales, carotides ou axillaires).

Une composition avantageuse selon l'invention comprend du 2-bromo-2-nitropropane-1,3-diol et un antiseptique, notamment choisi parmi le méthanol et l'éthanol, ladite composition étant caractérisée en ce qu'elle comprend 5% en poids de 2-bromo-2-nitropropane-1,3-diol.

Cette composition peut également comprendre en outre un anticoagulant, un agent pénétrant, et, le cas échéant, un colorant.

Une composition décritecomprend du 2-bromo-2-nitropropane-1,3-diol, un anticoagulant, un agent pénétrant, un antiseptique, et le cas échéant, un colorant, ladite composition étant caractérisée en ce qu'elle comprend de 0,3% à 2,4%, et de préférence de 0,3% à 1,2% en poids de 2-bromo-2-nitropropane-1,3-diol. Cette composition est notamment destinée à être utilisée dans le cadre de l'injection artérielle.

Une autre composition avantageuse selon l'invention comprend du 2-bromo-2-nitropropane-1,3-diol, un antiseptique, et le cas échéant, un colorant, ladite composition étant caractérisée en ce qu'elle comprend 5%, en poids de 2-bromo-2-nitropropane-1,3-diol. Cette composition est notamment destinée à être utilisée dans le cadre de l'injection dans les cavités.

Une autre composition comprenant du 2-bromo-2-nitropropane-1,3-diol, un anticoagulant, un agent pénétrant, un antiseptique, et le cas échéant, un colorant, ladite composition étant caractérisée en ce qu'elle comprend de 0,8% à 1,2% en poids de 2-bromo-2-nitropropane-1,3-diol est décrite. Cette composition est notamment destinée à être utilisée dans le cadre de l'embaumement des corps pour dissection.

Une autre composition comprenant du 2-bromo-2-nitropropane-1,3-diol, un anticoagulant, un agent pénétrant, un antiseptique, et le cas échéant, un colorant, ladite composition étant caractérisée en ce qu'elle comprend de 0,1% à 0,5%, de préférence 0,15%, en poids de 2-bromo-2-nitropropane-1,3-diol est décrite. Cette composition est notamment destinée à être utilisée dans le cadre de la conservation d'organes.

Comme indiqué ci-dessus, la concentration préférée en bronopol dans les compositions prêtes à être injectées par injection artérielle est égale à 0,6% en poids, tandis que la concentration préférée en bronopol dans les compositions prêtes à être injectées par injection dans les cavités selon l'invention est égale à 5% en poids. Ces concentrations optimales ont été déterminées par la Demanderesse au vu de nombreux essais expérimentaux.

Ainsi, l'analyse de l'ensemble des résultats des essais montre pour ce qui concerne la concentration en bronopol, qu'une concentration trop élevée conduit généralement à des phénomènes négatifs correspondant notamment :
- à un risque de dessèchement prématuré du corps et particulièrement des parties visibles que sont le visage et les mains ;
- à une diminution de la souplesse de la peau et des tissus ;
- à une détérioration de la couleur du visage et des mains ;
- à la probabilité d'apparition de tâches rouges dans un premier temps puis brunâtres ensuite, disgracieuses et donc préjudiciables à la présentation du défunt.

Par opposition, une concentration trop faible peut avoir l'effet inverse et ne pas suffisamment entraver la dégradation du corps.

Les essais réalisés avec la concentration cible montrent en outre que :
- la présentation des défunts est bonne,
- la couleur est naturelle,
- que la souplesse de la peau et des tissus est conservée,
- qu'il n'y a pas de gonflement gazeux au niveau de l'abdomen pendant la durée normale d'exposition (notamment 6 à 8 jours),
- qu'il n'y a pas d'odeur de décomposition ni de produit chimique par exemple.

La Demanderesse a également effectué des essais supplémentaires afin d'évaluer la dégradation ultérieure du corps après inhumation : Il est en effet important de mettre en exergues, pour ce qui concerne la thanatopraxie réalisée dans le cadre des soins de présentation et de conservation des défunts qui sont présentés à leur proches, que cette pratique n'a pas pour objectif de "momifier" les corps mais simplement de leur conserver, durant la ou les périodes légales avant "disparition" du corps, une bonne hygiène de conservation et une présentation visuelle de bonne qualité de façon à faciliter le transfert du deuil.

Par ailleurs, les problématiques liées à l'urbanisme au travers notamment de la gestion des cimetières (renouvellement nécessaire des concessions à intervalles réguliers) conduisent à considérer que les soins de thanatopraxie, s'ils doivent arrêter momentanément la dégradation du corps, doivent également permettre au phénomène de dégradation de reprendre ultérieurement.

Il est à cet égard important de mettre en évidence que, sur l'ensemble des analyses bactériologiques effectuées sur les embaumements utilisant les concentrations cibles des produits d'injection (0,6% pour l'artériel et 5% pour le produit cavité selon l'invention), on constate la présence de bactéries dans le liquide issu du corps.

Ceci signifie que l'utilisation des produits stabilisés (avec la composition cible) n'entrave pas totalement le développement bactériologique et n'interrompt pas totalement le processus de dégradation du corps qui reprendra ultérieurement.

Les résultats obtenus en fonction des concentrations en bronopol sont les suivants :

| Concentration en bronopol | Présence de bactéries dans le liquide corporel |
|---|---|
| ≥ 1,2% | 1 cas sur 3 avec bactéries |
| 0,90% | 1 cas sur 2 avec bactéries |
| ≤ 0,80% | 7 cas sur 8 avec bactéries |

L'incidence de la concentration en bronopol est donc évidente sur la présence de bactéries dans le liquide corporel et donc potentiellement sur la dégradation future du corps après inhumation.

Il est cependant important d'évoquer que la dégradation du bronopol dans le temps doit, parallèlement à la diminution de l'effet biocide de la substance active, correspondre à la réapparition des bactéries même dans les cas où celles-ci ne sont quasiment plus présentes à court terme du fait d'une trop grande concentration en bronopol.

Ces cas pour lesquels la concentration supérieure à 1% ne concernent que les embaumements destinés aux dissections et sont moins importants, dans la mesure où les pièces anatomiques issues de ces embaumements sont systématiquement crématisées.

Concernant l'injection dans les cavités, l'absence systématique de gaz dans la partie abdominale permet de conclure à l'efficacité du produit cavité.

Comme indiqué ci-dessus, la concentration décrite préférée en bronopol dans les compositions prêtes à être injectées utilisées pour les embaumements pour dissection est comprise de 0,6% à 1,2% en bronopol. Ces concentrations optimales ont été déterminées par la Demanderesse au vu de nombreux essais expérimentaux.

Dans ce type de soin, il n'est pas procédé à une ponction de liquide ni à une injection en cavité. Le produit doit donc être sensiblement plus actif que le liquide artériel utilisé pour un embaumement classique.

Les essais réalisés à 2,4% puis 1,5% puis à 1,2% puis à 1% puis à 0,8% ont permis de constater l'atteinte optimale des objectifs recherchés avec une concentration entre 0,8% et 1,2%.

Les résultats des dissections effectuées sur les corps montrent que, quelle que soit la concentration au dessus de 0,8% (plus typiquement de l'ordre de 1 %) les caractéristiques du corps sont les suivantes :
- bonne souplesse des tissus,
- bonne coloration rosée,
- consistance proche de la normale (avant le décès),
- dissection réalisée facilement,
- absence d'odeur émanant des tissus profonds,
- absence de fibrose des tissus, et
- muscles peu friables (pas de fragilisation).

En conclusion, que ce soit pour les embaumements destinés aux défunts présentés aux familles ou pour ceux destinés à être disséqués, les résultats correspondent pleinement aux attentes fixées en matière de qualité.

Pour ce qui concerne plus particulièrement les embaumements destinés à la présentation des défunts et si l'on compare avec les soins réalisés avec des produits à base de formaldéhyde, on constate, en faveur de l'utilisation des compositions de l'invention, les éléments suivants :
- Conservation : satisfaisante et sensiblement identique aux résultats obtenus avec le formaldéhyde et en tout cas largement suffisante dans le cadre des soins des conservations destinés à la présentation des corps aux familles ou à la réalisation de dissections.
- Présentation du corps :
   ∘ Meilleures couleurs qu'avec le formaldéhyde,
   ∘ Apparence très supérieure de naturel,
   ∘ Souplesse très supérieure de la peau et des tissus résultant d'une très bonne réhydratation, et
   ∘ Absence totale d'odeur.

Globalement, l'aspect conservation est identique et l'apparence est bien meilleure que dans le cas d'utilisation du formaldéhyde.

Pour les embaumements destinés à la dissection et pour des raisons analogues les praticiens ayant procédé à des dissections avec les compositions de l'invention considèrent ces produits comme étant très largement supérieurs aux produits à base de formaldéhyde. En effet, les produits à base de formaldéhyde conduisent à une déshydratation très rapide et importante qui, en conférant une grande dureté à la peau et aux tissus, rendent difficile la réalisation de dissection dans de bonnes conditions.

Par ailleurs, les odeurs dégagées avec les produits à base de formaldéhyde sont difficilement supportables.

Si le choix de concentrations les plus faibles possibles résulte de la volonté de ne pas "brûler" les corps par une solution trop agressive, il a été également extrêmement travaillé de façon à présenter, compte tenu des faibles quantités de bronopol utilisées, un impact minimal sur l'environnement.

Par définition, un biocide est un élément agressif pour la vie et donc pour l'environnement. Il était donc impératif, afin de limiter au mieux les éventuels impacts sur l'environnement, de déterminer les concentrations en bronopol les plus basses possibles afin d'obtenir d'une part les résultats de conservation et de présentation souhaités mais aussi un impact environnemental le moindre possible.

A cet égard, les études réalisées par la Demanderesse permettent de conclure que les concentrations utilisées ne présentent pas, dans le cadre de la disparition des corps par crémation ou inhumation, de danger pour l'environnement.

En outre, et dans le cadre de l'inhumation et de la gestion des cimetières, il est important que la décomposition du corps ne soit pas stoppée mais seulement ralentie.

Les basses concentrations en bronopol utilisées montrent la persistance (et non l'arrêt) d'une activité bactériologique, ce qui laisse entendre (pour des concentrations en bronopol inférieures à 0,8% en solution diluée pour l'injection artérielle) que la dégradation du corps est certes ralentie pendant une certaine période mais qu'elle reprendra ensuite en permettant ainsi au phénomène de dégradation du corps de reprendre.

### PARTIE EXPÉRIMENTALE

### I - Injection artérielle :

Pour préparer la composition de l'invention, on prépare 1 litre de solution, qui est ensuite à diluer avec 2 à 8 litres complémentaires d'eau.

La composition en masse est la suivante :
▪ citrate de sodium : de 2 à 15 g ;
▪ glycérine : de 30 à 400 g ;
▪ éthanol ou méthanol : de 20 à 350 g ;
▪ amarante ou éosine : de 0 à 2,0 g ;
▪ bronopol : supérieur à 10 grammes ;
▪ eau

### 1) Préparation de la solution artérielle avant injection :

On peut envisager deux procédés, à savoir :
- soit la solution concentrée est prête à l'utilisation et il convient alors simplement de rajouter le volume d'eau complémentaire souhaité (de 2 à 8, voire jusqu'à 12 litres, d'eau complémentaires) ;
- soit la solution concentrée est préparée sans y avoir introduit le bronopol ; ainsi, après introduction du bronopol dans la solution concentrée, il convient de rajouter le volume d'eau complémentaire souhaité.

Il est important de mentionner que la quantité d'eau à rajouter, généralement de l'ordre de 5 litres (voire 11 litres) pour 1 litre de solution de base, peut être modifiée en fonction des conditions observées au moment de l'injection. L'état du défunt et les causes du décès peuvent en effet conduire à des concentrations différentes.

Dans le cadre de l'injection artérielle, les compositions suivantes ont été préparées et testées (ces compositions sont préparées pour 1 litre de solution concentrée auquel on ajoute 5 litres d'eau) :
(1) composition contenant 0,8% en poids de bronopol, qui comprend :
   - 49,8 g de bronopol ;
   - 9 g de citrate ;
   - 301,37 g de glycérine ;
   - 254,40 g (à 95%) d'alcool ; et
   - 4 gouttes d'éosine.
(2) composition contenant 1,7% en poids de bronopol, qui comprend :
   - 100 g de bronopol ;
   - 5,5 g de citrate ;
   - 305 g de glycérine ;
   - 242 g (à 95%) d'alcool ; et
   - 4 gouttes d'éosine.
(3) composition contenant 1,2% en poids de bronopol, qui comprend :
   - 72 g de bronopol ;
   - 9 g de citrate ;
   - 305 g de glycérine ;
   - 242 g (à 95%) d'alcool ; et
   - 4 gouttes d'éosine.

Il est à noter que pour des personnes à forte corpulence, il sera nécessaire d'injecter plus de solution afin d'obtenir des volumes d'injection plus importants. Cette préparation est adaptable en fonction de la morphologie du cas traité. Dans le cas où la personne a séjourné dans un endroit réfrigéré ou en fonction du délai d'injection après décès, il faudra moduler les concentrations afin d'obtenir des résultats de qualité optimale.

### 2) Procédé d'injection :

Cette opération met en oeuvre le procédé généralement utilisé en matière de soins de thanatopraxie, à savoir une injection et un drainage, ce dernier étant généralement effectué au niveau du coeur droit.

L'injection est réalisée au travers des artères fémorale ou carotide ou encore axillaire.

La quantité de fluide injecté est de l'ordre de 6 litres, cette quantité pouvant varier en fonction de l'état du défunt et du diagnostic réalisé par le thanatopracteur (besoin par exemple d'un drainage plus important).

Des essais complémentaires ont été effectués.

Ainsi, le produit concentré (avant dilution pour injection) suivant a été préparé (composition 3') :
Bronopol : 72 grammes
Glycérine : 300 grammes
Méthanol ou éthanol : 240 grammes
Citrate de sodium : 9 grammes
Eosine : quelques gouttes
Eau : solde pour atteindre 1 litre.

Il est à noter que les moyens pour faire varier la concentration en bronopol sont les suivants :
- 1 - soit on conserve la solution typique du produit concentré à 72 g de bronopol et on dilue plus ou moins en eau pour ajuster la concentration finale en bronopol (ceci signifie que la concentration des autres constituants peut être amenée à changer en fonction de la dilution en eau effectuée) ;
- 2 - soit on ajuste la teneur en bronopol dans la solution concentrée qui comporte toujours les mêmes concentrations dans les autres composants (exception pour l'eau dont la quantité est ajustée pour atteindre un litre) ; dans ce cas, et dans la solution type ci-dessus, la teneur en bronopol peut varier de 36 g à 144 g ; la concentration en bronopol passe donc, pour une même dilution complémentaire (11 L d'eau pour 1 L de solution concentrée capable de 2 soins de 6 L de solution diluée chacun) de 0,3% à 1,2% en bronopol sans modification des concentrations (sauf l'eau) des autres composants (une application particulière de ce cas de figure correspond à une teneur en bronopol de 48 g permettant d'obtenir une solution diluée de 0,4% en bronopol) ;
- 3 - soit on procède à une solution intermédiaire entre les deux procédés précédents qui consiste à faire varier corrélativement les teneurs dans les différents composants de façon à obtenir dans la solution diluée la teneur cible choisie en bronopol (de 0,3% à 1,2%) et des concentrations intermédiaires dans les autres composants par rapport à ce qui est obtenu dans chacun des deux procédés précédents.

Ensuite, le produit à injecter est préparé à partir du produit concentré susmentionné par dilution.

Ainsi, on prépare un produit dont la concentration en bronopol est de 0,6% en diluant 1 litre de solution concentrée avec 11 litres d'eau (sachant que 6 litres de solution diluée sont nécessaires par soin).

La composition de la solution diluée prête à l'usage est donc par litre de (composition 3bis) :
Bronopol : 6 grammes (0,6%)
Glycérine : 25 grammes (2,5%)
Méthanol ou éthanol : 20 grammes (2%)
Citrate de sodium : 0.75 grammes par litre
Eosine : quelques gouttes
Eau : solde pour atteindre 1 litre

### II - Injection dans les cavités selon l'invention :

Dans le cas d'une injection en cavité (zone n'affectant pas la présentation physique du corps), l'objectif recherché est de stopper la prolifération bactérienne. Il convient alors de n'utiliser que les produits ayant une action antibactérienne, à savoir le bronopol et le méthanol ou l'éthanol. Ainsi, dans ce mode de réalisation, la glycérine et le citrate ne sont pas obligatoirement utilisés. On peut cependant par exemple prévoir l'utilisation éventuelle de citrate.

En ce qui concerne les concentrations et afin de renforcer l'effet antibactérien, la concentration en bronopol et en éthanol est renforcée (voir ci-après) pour atteindre 5% pour le bronopol et 40% pour l'alcool éthylique.

Pour préparer la composition de l'invention, on prépare 0,5 litre de solution dont la composition en masse est la suivante :
o bronopol : supérieur à 10 g ;
o éthanol ou méthanol : supérieur à 100 g ;
o eau

### 1) Préparation de la solution :

On peut envisager trois procédés, à savoir :
- soit la solution est prête à l'emploi ;
- soit la solution est une solution concentrée à laquelle il convient de faire l'appoint d'eau ;
- soit le bronopol est ajouté avant la réalisation du soin et l'appoint d'eau est effectué.

Dans le cadre de l'injection dans les cavités, les compositions suivantes ont été préparées et testées (ces compositions sont préparées pour 500 mL et sont utilisées en l'état) :
(4) composition comprenant :
   - 40 g de bronopol (8%) ; et
   - 257,31 g (à 95%) d'alcool.
(5) composition comprenant :
   - 25 g de bronopol (5%) ; et
   - 202 g (à 95%) d'alcool.

### 2) Procédé d'injection :

Cette opération utilise le procédé généralement pratiqué en matière de soins de thanatopraxie, à savoir : ponction des gaz et liquides au niveau des cavités thoraciques et abdominales, et injection de la composition selon l'invention, dans chacune des cavités du produit, de façon à ce que ladite composition diffuse au mieux dans l'ensemble des cavités concernées.

Des essais complémentaires ont été effectués.

Ainsi, le produit suivant a été préparé :
Bronopol : 50 grammes
Méthanol ou éthanol : 400 grammes
Eau : solde pour atteindre 1 litre

*(Cette solution permet de réaliser 2 soins sachant que pour chaque soin on procède à une injection de 0,5 litre de solution pure (non diluée) dans les cavités).*

La concentration en bronopol dans le liquide est donc de 5%.

L'injection dans les cavités est effectuée au moyen d'une solution ne nécessitant pas de dilution préalable avant l'injection.

### III - Durée du soin :

Le procédé opératoire de réalisation du soin est identique à celui utilisé dans le cas de l'utilisation d'un produit à base de formaldéhyde. La durée du soin dans son intégralité est donc identique, à savoir de 1 h15 à 1h30 (maquillage compris).

### IV - Résultats :

En utilisant toujours une base identique en glycérine, éthanol ou méthanol, des essais ont été effectués en utilisant les compositions exemplifiées ci-dessus (compositions (1), (2), (3) et (3bis) pour l'injection artérielle et compositions (4) et (5) pour l'injection dans les cavités).

Le bronopol étant un des éléments actifs essentiels dans la conservation des tissus, sa variation a une forte influence sur cette conservation. Plus la concentration est élevée, plus les effets de conservation sont importants, engendrant cependant des facteurs potentiellement perturbateurs au niveau de la présentation du corps des défunts.

Le choix de cette concentration résulte donc du bon compromis à faire entre les 2 objectifs recherchés (conservation et présentation), l'optimum commun (pour des corps ne présentant pas de spécificité particulière) ayant été déterminé à 0,6%.

Pour les essais qui ont été effectués, les corps ont fait l'objet d'une observation pendant une durée maximale de 15 jours.

L'objectif poursuivi dans la variation de concentration en bronopol est d'établir la concentration optimale permettant une bonne conservation du corps ainsi qu'une bonne présentation sans que l'on assiste à une déshydratation trop importante.

Les essais réalisés, pour des corps ne présentant pas d'anomalie particulière, ont permis de mettre en évidence que la concentration de 0,6% en bronopol conduisait à des résultats satisfaisants.

### 1) Conservation du corps :

Dans le cadre de l'injection dans les cavités ou l'injection artérielle, on assiste à une diminution importante de la décomposition du corps mise en évidence par :
- la faible modification de l'apparence du défunt tout au long de la période observée ;
- l'absence d'apparition de gaz au niveau des cavités ; et
- l'absence d'odeur particulière pendant la durée d'observation.

### 2) Aspect du défunt :

Après avoir effectué le soin, on observe une réhydratation des tissus, accompagnée d'une bonne diffusion (fluidité) du produit de l'invention dans le corps. Ceci se caractérise par un toucher de la peau plus souple et à un visuel plus "doux". Le défunt conserve un aspect naturel et ne comporte pas l'aspect cireux souvent observé lors d'une injection de produits formolés.

Les effets du bronopol sont donc satisfaisants, tant à l'égard de la conservation, qu'à celui de la qualité de présentation des défunts.

L'absence de décomposition résultant probablement de la faible évolution bactérienne permet de conclure au bon comportement hygiénique des corps traités.

### V - Comparaison du produit avec le formol :

La pratique opératoire du soin est identique à celle effectuée avec les produits formolés.

Sur le plan de la conservation des corps en tant que telle (durant la période d'observation soit de l'ordre de 15 jours), on peut conclure à une efficacité identique des solutions à base de bronopol et à base de formaldéhyde. La différence essentielle résulte de l'apparence du corps qui, comme nous l'avons précisé précédemment, est plus souple, avec des couleurs moins dégradées et donc une apparence générale plus "sereine" et détendue que dans le cas d'utilisation de solution où le formaldéhyde est utilisé.

Comme pour les solutions comportant du formol, le produit peut être modulable dans sa concentration en bronopol en fonction de la nature des corps à traiter.

On choisira ainsi :
- des concentrations plus importantes pour des corps dont la dégradation biologique est plus avancée (soit de l'ordre de 0,8 à 1,2% en poids de bronopol) ;
- des concentrations de 0,4 à 0,8% pour des corps "normaux" de manière à ne pas provoquer de dessèchement trop rapide des tissus ;
- en cas d'ictère (jaunisse), on peut encore réduire la concentration en bronopol de 0,3 à 0,4%, ce qui permettra d'éviter le verdissement du corps et permettra une meilleure diffusion des produits dans les tissus.

### VI - Conservation des pièces anatomiques :

1. Des essais ont également été effectués au sein de la faculté de médecine dans le cadre de la conservation des corps destinés à être disséqués.
   Les résultats observés sont très intéressants, sachant que ces essais ont été réalisés uniquement en injection sans procéder à aucune ponction.
   Pour obtenir une conservation optimale du corps, on a utilisé une concentration en bronopol de 1% en poids pour une quantité injectée de 4 litres au total.
   La dilution de la solution de base étant effectuée dans ce cas précis avec 3,5 litres et non 5,5 litres d'eau pour 500 mL de solution, les concentrations en alcool, en glycérine, en citrate et en éosine se trouvent également majorées par un facteur de 1,5 environ.
   Les résultats obtenus lors des dissections intervenues 14 et 16 jours après le décès sont très intéressants. De plus, de très bons résultats sont obtenus en ce qui concerne l'état de conservation du corps et la souplesse des tissus, le sang étant gélifié, ce qui permet ainsi une observation et une dissection dans de meilleures conditions. On constate également une absence d'odeurs.
   Par exemple, la composition (2) susmentionnée a été utilisée sur un sujet (homme décédé depuis 8 jours) de corpulence moyenne.
   Il a été constaté avant la pratique du test que les lividités étaient très marquées et la présence de taches vertes abdominales importantes et des globes oculaires affaissés (corps congelé).
   Le produit a ensuite été injecté par l'artère carotide en une passe (une fois 3,6 litres d'eau et 400 mL de composition (2) susmentionnée), pour une meilleure dilution du produit (total de l'injection = 4 litres)(concentration en bronopol = 1 %).
   Le sujet a été porté en alternance entre la chambre froide (7°C) et la table d'autopsie (25°C).
   Résultat après injection : Bon passage du fluide, mise en chambre froide.
   Résultat 1^{er} jour : Le corps a été sorti pour permettre des travaux pratiques le lendemain. Aucun gonflement n'a été constaté, seuls les bras laissaient apparaître des traces veineuses importantes, pas de tache verte abdominale.
   Résultat 2^{ème} jour : Réalisation de travaux pratiques : dissection du cou par les médecins, les muscles étaient bien colorés, aucune odeur. Le médecin n'a pas constaté de différence avec un corps juste décédé, n'ayant pas reçu d'injection au formol.
   Résultat 6^{ème} jour : Prélèvement par les médecins du bloc coeur-poumon, qui ont été trouvés comme étant de bonne qualité. Les viscères étaient bien conservées, ce qui a facilité le prélèvement et donné l'apparence intérieure d'un corps non « embaumé » et récent. Le sang était gélatineux.
   Des essais complémentaires ont été effectués.
   Ainsi, la solution concentrée utilisée est strictement la même que celle utilisée pour les soins de présentation aux familles et suit donc les mêmes règles exposées précédemment pour son élaboration et sa dilution si ce n'est que la quantité de liquide injecté dans le corps n'est que de 4 litres au total (sans ponction ni injection cavité).
   Ainsi, on utilise la solution concentrée typique à 72 g de bronopol qui est utilisée (composition 3'), un demi-litre de celle-ci étant dilué avec 3,5 litres d'eau pour obtenir une concentration en bronopol de 0,9%.
2. Des essais ont également été effectués au sein de la faculté de médecine dans le cadre de la conservation d'organes.

Plus particulièrement des essais ont été effectués pour la conservation d'un coeur. Ainsi, les récents résultats obtenus d'un test de conservation d'un coeur pendant une durée de 8 mois ont montré que le coeur s'était conservé dans d'excellentes conditions.

La dissection réalisée sur ce coeur stipule que la structure de l'organe n'est pas altérée, que les cordes des valvules sont très bien conservées, que les tissus sont un peu rigides et que la morphologie du coeur est très bien conservée.

La conservation du coeur a été réalisée en faisant baigner le coeur dans une solution composée de 200 cm³ de la solution typique destinée aux soins de conservation de présentation aux familles à 72 grammes de bronopol (composition 3') dans 10 litres d'eau.

La concentration en bronopol de cette solution était de 0,15% en bronopol.

## Revendications

1. Utilisation d'une composition comprenant du 2-bromo-2-nitropropane-1,3-diol pour la conservation des tissus, **caractérisée en ce que** ladite composition comprend de 5% à 8% en poids de 2-bromo-2-nitropropane-1,3-diol par rapport au poids total de ladite composition, pour la réalisation de soins de thanatopraxie par injection dans les cavités.

2. Utilisation selon la revendication 1, **caractérisée en ce que** la composition comprend en outre un anticoagulant, ledit anticoagulant étant présent à raison de 0,05% à 2% en poids par rapport au poids total de ladite composition.

3. Utilisation selon l'une quelconque des revendications 1 ou 2, **caractérisée en ce que** la composition comprend en outre un agent pénétrant, ledit agent pénétrant étant présent de 3% à 40% en poids par rapport au poids total de ladite composition.

4. Utilisation selon l'une quelconque des revendications 1 à 3, **caractérisée en ce que** la composition comprend en outre un antiseptique, ledit antiseptique étant présent de 2% à 45% en poids par rapport au poids total de ladite composition.

5. Utilisation selon l'une quelconque des revendications 1 à 4, **caractérisée en ce que** la composition comprend en outre un colorant, ladite composition comprenant moins de 0,2% en poids de colorant par rapport au poids total de ladite composition.

6. Composition comprenant du 2-bromo-2-nitropropane-1,3-diol, un antiseptique, et le cas échéant, un colorant, ladite composition étant **caractérisée en ce qu'**elle comprend 5% en poids de 2-bromo-2-nitropropane-1,3-diol.

7. Composition constituée de 2-bromo-2-nitropropane-1,3-diol, d'un antiseptique choisi parmi le méthanol et l'éthanol, et le cas échéant, d'un colorant, ladite composition étant **caractérisée en ce qu'**elle comprend 5% en poids de 2-bromo-2-nitropropane-1,3-diol.

## Patentansprüche

1. Verwendung einer Zusammensetzung, umfassend 2-Bromo-2-nitropropan-1,3-diol zur Konservierung von Geweben, **dadurch gekennzeichnet, dass** die Zusammensetzung 5 Gew% bis 8 Gew% 2-Bromo-2-nitropropan-1,3-diol mit Bezug auf das Gesamtgewicht der Zusammensetzung für die Durchführung von Thanatopraxie durch Injektion in die Hohlräume umfasst.

2. Verwendung nach Anspruch 1, **dadurch gekennzeichnet, dass** die Zusammensetzung außerdem ein Antikoagulans umfasst, wobei das Antikoagulans eine Menge 0,05 Gew% bis 2 Gew% mit Bezug auf das Gesamtgewicht der Zusammensetzung aufweist.

3. Verwendung nach einem beliebigen der Ansprüche 1 oder 2, **dadurch gekennzeichnet, dass** die Zusammensetzung außerdem ein Eindringmittel umfasst, wobei das Eindringmittel 3 Gew% bis 40 Gew% mit Bezug auf das Gesamtgewicht der Zusammensetzung aufweist.

4. Verwendung nach einem beliebigen der Ansprüche 1 bis 3, **dadurch gekennzeichnet, dass** die Zusammensetzung außerdem ein antiseptisches Mittel umfasst, wobei das antiseptische Mittel 2 Gew% bis 45 Gew% mit Bezug auf das Gesamtgewicht der Zusammensetzung aufweist.

5. Verwendung nach einem beliebigen der Ansprüche 1 bis 4, **dadurch gekennzeichnet, dass** die Zusammensetzung außerdem einen Farbstoff umfasst, wobei die Zusammensetzung mindestens 0,2 Gew% Farbstoff mit Bezug auf das Gesamtgewicht der Zusammensetzung umfasst.

6. Zusammensetzung, umfassend 2-Bromo-2-nitropropan-1,3-diol, ein antiseptisches Mittel und gegebenenfalls einen Farbstoff, wobei die Zusammensetzung **dadurch gekennzeichnet ist, dass** sie 5 Gew% 2-Bromo-2-nitropropan-1,3-diol umfasst.

7. Zusammensetzung, bestehend aus 2-Bromo-2-nitropropan-1,3-diol, einem antiseptischen Mittel, ausgewählt aus Methanol und Ethanol, und gegebenenfalls einem Farbstoff, wobei die Zusammensetzung **dadurch gekennzeichnet ist, dass** sie 5 Gew% 2-Bromo-2-nitropropan-1,3-diol umfasst.

## Claims

1. Use of a composition comprising 2-bromo-2-nitropropane-1,3-diol for tissue preservation, **characterized in that** said composition comprises from 5 % to 8 % by weight of 2-bromo-2-nitropropane-1,3-diol relative to the total weight of said composition, to carry out thanatopraxis care via injection into cavities.

2. The use according to claim 1, **characterized in that** the composition further comprises an anticoagulant, said anticoagulant being contained in a proportion of 0.05 % to 2 % by weight relative to the total weight of the composition.

3. The use according to any of claims 1 or 2, **characterized in that** the composition further comprises a penetrant, said penetrant being contained at 3 % to 40 % by weight relative to the total weight of said composition.

4. The use according to any of claims 1 to 3, **characterized in that** the composition further comprises an antiseptic, said antiseptic being contained at 2 % to 45 % by weight relative to the total weight of said composition.

5. The use according to any of claims 1 to 4, **characterized in that** the composition further comprises a colouring agent, said composition comprising less than 0.2 % by weight of colouring agent relative to the total weight of said composition.

6. Composition comprising 2-bromo-2-nitropropane-1,3-diol, an antiseptic and optionally a colouring agent, said composition being **characterized in that** it comprises 5 % by weight of 2-bromo-2-nitropropane-1,3-diol.

7. Composition composed of 2-bromo-2-nitropropane-1,3-diol, an antiseptic selected from among methanol and ethanol, and optionally a colouring agent, said composition being **characterized in that** it comprises 5 % by weight of 2-bromo-2-nitropropane-1,3-diol.
